# EUROPEAN PATENT SPECIFICATION

(11) **EP 0 658 140 B1**
(45) Date of publication and mention of the grant of the patent: **24.04.1996**
(21) Application number: 92920323.0
(22) Date of filing: 18.09.1992
(51) Int. Cl.: B32B 27/06, B32B 3/02, F16L 59/02

(54) **ELECTRICALLY CONDUCTIVE THERMAL SHIELD MATERIALS**
ELEKTRISCH LEITENDE, THERMISCH ABSCHIRMENDE MATERIALIEN
MATERIAUX POUR UN ECRAN THERMIQUE CONDUCTEUR D'ELECTRICITE

(30) Priority: 01.09.1992 US 939288
(43) Date of publication of application: 21.06.1995
(73) Proprietor: W.L. GORE & ASSOCIATES, INC., Newark, Delaware 19714-9206 (US)
(72) Inventor: CULLER, Gregory, D., Nottingham, PA 19362 (US); STREET, Norman, A., Newark, DE 19713 (US)
(74) Representative: Klunker . Schmitt-Nilson . Hirsch
(86) International application number: US9207973
(87) International publication number: WO9405496

(56) References cited:
- EP-A- 0 477 015
- US-A- 3 819 443

## Description

### FIELD OF THE INVENTION

This invention relates to thermal shield materials for covering and protecting equipment from temperature extremes. More particularly, the invention is directed to such materials that are also shape-conformable and lightweight.

### BACKGROUND OF THE INVENTION

Many types of equipment and instruments used, for example, in industrial and communication system environments are adversely affected by temperature extremes and sudden variations in temperature which may be commonplace in such environments. To ensure proper operation, these devices should be kept at uniform temperatures within specified temperature limits.

There are various ways known to accomplish such temperature control, for example, by using auxiliary equipment to control temperatures inside equipment and instrument enclosures or within the structures housing the devices. These, however, suffer the drawbacks of excessive bulkiness, weight and energy usage, and are undesirable for applications where space, load carrying ability and available energy are limited.

An alternative method to control heat transfer to and from surfaces and enclosures is the use of high efficiency thermal shield or control coverings or blankets. These have the advantages of relatively low bulkiness, light weight, and no energy usage. Such materials are normally applied closely to the surfaces and structures whose temperatures are to be controlled.

It can be seen then that these constructions should be sufficiently strong, tough and flexible to withstand assembly and use without appreciable deterioration in integrity and performance. They should also be highly conformable and easily shaped in order to be closely attached to irregularly shaped surfaces and structures without damage. In addition, it is often very important that the construction be ultra lightweight.

The construction must also be capable of reducing all three modes of heat transfer, namely, conduction, convection and radiation in order to minimize heat transfer to and from the structures which it covers. Additionally, the construction is desirably electrically conductive in three dimensions in order for it to be used as a path to conduct electrostatic charges to a common ground.

Commonly used thermal shield or control materials are Kapton® polyimide and polyolefin plastic films with metallized surfaces that are formed into multilayer constructions. Between layers of the plastic films is typically placed an open porous spacer material such as a light fabric or nonwoven scrim to prevent contact of the film layers. The multilayer construction is then placed as closely as possible to the surface or structures and attached to them. Such constructions, although light and strong have disadvantages such as poor drapability, conformability and tear strength and are difficult to use except on smooth regular surfaces. Materials of this type are described in Kurz USP 4,230,057.

More recently, in European published application 0477015, a layered construction of metallized microporous expanded polytetrafluoroethylene films have been suggested for use as thermal control materials, but they are not satisfactory for electrical conductivity.

### SUMMARY OF THE INVENTION

The present invention provides a thermal control covering which is a layered construction comprising at least two layers, each layer being made of microporous expanded polytetrafluoroethylene, each of which has on one of its surfaces a thin conductive film, preferably metal, the layers of the construction being arranged so that the conductive surface of one layer is adjacent to the untreated surface of the adjacent layer, and wherein each layer contains a number of perforations defining tabs that are bent substantially 180° from the plane of the layer so that the conductive film in the tab of one layer is in contact with the conductive film covering the adjacent layer. The layered construction may have two or more layers and the layers may be joined together at intervals over the areal extent of the construction to provide structural integrity. The bottom layer ordinarily will not contain tabs or else will not have the tabs bent.

### BRIEF DESCRIPTION OF THE DRAWINGS

Figure 1 is an exploded cross-section view of a multilayered construction of thermal control material, with the layers joined by spot stitching and before tabs are bent back.

Figure 2a, b and c depict various tab cut-out configurations from a top view of the material.

Figure 3 and 4 are cross-sectional view of one tab being bent back. Figure 3 shows a 90° bend and Figure 4 shows at 180° bend.

Figure 5 is a cross section of a material of the invention which depicts how the metal in the tab of one layer abuts the metal surface of an adjacent layer.

Figure 6 is a cross section of a material of the invention which depicts one means of bonding adjacent layers.

### DETAILED DESCRIPTION OF THE INVENTION

In the present invention, heat transfer by conduction is reduced first by the inherent low thermal conductivity of porous expanded polytetrafluoroethylene and secondly by the structure of the porous polytetrafluoroethylene substrate layer which provides a tortuous path of pores from one side to the other which is much longer than the thickness of the layer.

Also, heat transfer by convection is low, due to the small pores, tortuousity and high pore volume of the structure of the porous polytetrafluoroethylene (PTFE) layer. The PTFE structure which may have a pore volume of about 70% or more, preferably 80% or more, and most preferably 90% or more, serves as baffles to air currents and resists influence by external air movement thus effectively creating dead air space which is a good insulator. In vacuum and other low pressure applications there is little or no air within the pores so heat transfer by convection is virtually nil.

Heat transfer by radiation is reduced by the good absorption and emissivity characteristics of the metallized porous polytetrafluoroethylene material and can be further reduced by increasing the number of layers of the construction. A further advantage which is imparted by the irregular surface finish of the metallized porous polytetrafluoroethylene material is that reflectance from the surface is diffuse rather than special thus reducing inadvertent focusing of incident radiant energy to a spot where it could cause damage.

This invention also provides a novel material with excellent drape characteristics which permit it to closely follow and be snugly attached to irregular contours and shapes if desired, thus minimizing bulkiness and space occupancy. Additionally, the material is sufficiently strong and tough to be stretched over surface irregularities for the purpose of streamlining or concealing surface irregularities. The material can be easily handled and can be readily attached to other devices by mechanical means such as screws, rivets, staples and the like or by adhesives such as polyurethane adhesives, or epoxy adhesives.

The multilayer construction is also ultra lightweight each layer being only about half the weight of a layer of the know Kapton® film containing construction. The porous polytetrafluoroethylene layers have very low bulk density due to the porosity of the material. The layers, being porous, also provide the same function as the porous spacer materials used in conventional multilayer constructions and, as a result, do not require that additional spacer materials be interposed between the layers. The layers may be joined together by stitching or by localized adhesive bonding.

Porous expanded polytetrafluoroethylene film (ePTFE) used herein was obtained from W. L. Gore and Associates, Inc. It was prepared in accordance with the procedure set forth in US patents 4,187,390 and 3,956,566. It can have a void content between 25% and 90% and the pores are continuous from one side to the other. It can range from .025mm to 5mm thick or more and is flexible and conformable. The ePTFE has a thin coating of conductive polymer or conductive metal, e.g. copper, nickel, gold, or alloys such as stainless steel, metal oxides or metal nitrides, and, preferably, aluminum, covering the surface of one side. The metal can be deposited on the film by vapor deposition, although other methods known in the art can be used, such as sputter coating, electrochemical deposition and the like.

Instead of a thin coating of conductive metal, a thin coating of a conductive polymer can be used. It can be applied by extrusion or sputtering. Representative conductive polymers include the pyrollized polymers of Kapton (poly-N, N-bis (p,p-oxydiphenylene) pyromillitimide), polyacrylonitrate, polypyrole, polyaniline and the like.

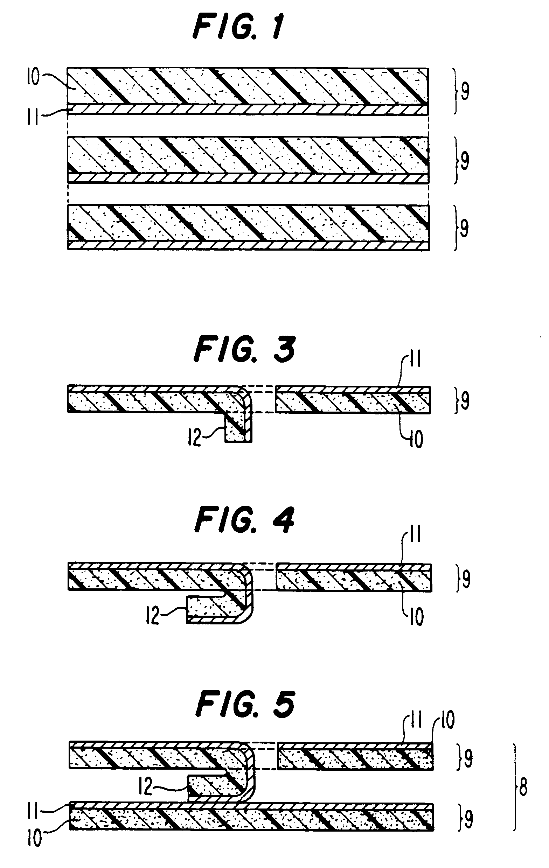

Referring to Figure 1, thermal control material 9 is made up of the ePTFE substrate 10 with a coating of conductive polymer or metal 11 on it. The coating 11 is deposited so as to be a surface coating on substrate 10 with minimal penetration into the pores of the substrate 10. The preferred metal for the metallization is aluminum; however, for applications for which aluminum is unsuited, other metals and materials with the required properties may be used, for example, conductive noble metals, ferromagnetic metal, conductive refractory metals, conductive oxides and the like.

Metallizing is used herein to mean the application of conductive metal 11 to the porous polytetrafluoroethylene surface at least to a thickness such that the surface characteristics of the metallized material are associated with those of the applied metal. When coating 11 is of vacuum deposited aluminium the coating 11 is stable and oxidation thereof is minimized. The coating 11 has a dull appearance due to the irregular surface finish imposed on it by the porous film 10.

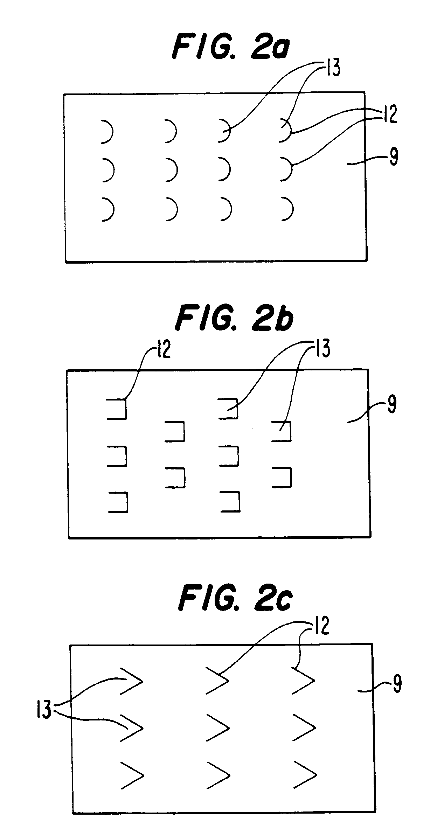

Once the coating is applied to obtain a layer of material 9, incisions are made through the layer as shown in Figures 2a, b and c so as to form tabs that can be folded back. Thus, to form the tabs, the incisions will generally have a shape like those exemplified as 12 in Figures 2a, b and c. The tab formed by the incision is denoted as 13. Thus, an array of tabs are formed on the layer. The figures show the tabs in a patterned array, but a random array may be used.

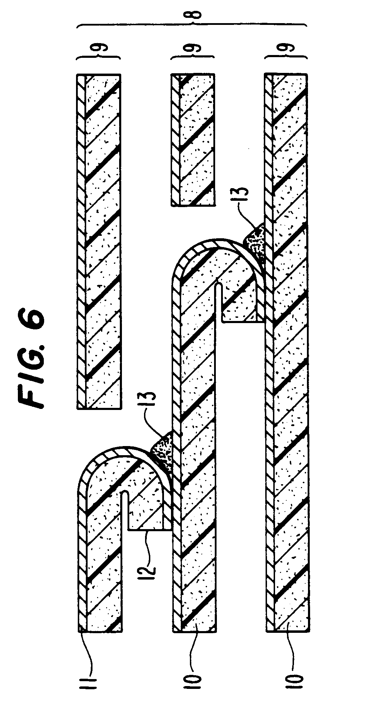

The tabs are then bent in the same direction as shown in Figure 3 and bending is continued until the tabs are bent 180°, as shown in Figure 4.

Several of the material 9 laminates were then arranged in layers, as shown in Figure 5, with the conductive surface 11 facing the untreated surface of the next layer in order to form a multilayered construction 8 and the tabs 12 folded back as depicted in Figure 4 and 5. The number of layers used in the construction 8 is at least two, but can be as many as twenty or more depending on the insulation value required by a particular application. As is evident from Figure 5, by bending back tab 12 and placing the adjacent layer 9 next to the tab so that the surface of the adjacent layer abuts the metal surface of the bent back tab, electrical conductivity is achieved from one layer to the other.

The layers, once arranged, can be joined together to form a handleable construction 8 which has structural integrity and can be cut to specific end-use shapes and applied to surfaces without loss of proper alignment or conductivity of the various layers. It is important that joining the layers be done in such a manner that the heat transfer characteristics of the composition be influenced as little as possible. A preferred method to accomplish this is to join the layers in the area of the bent back tops using low thermal conductivity materials, for example, by local stitching with expanded polytetrafluoroethylene thread, with an adhesive dot, for example, of Thermogrip Brand hot melt adhesive, or tape that is resistant to high temperature, such as Kapton tape. Spacing of the joints is typically at four-inch to twelve-inch (10-30 cm) intervals but may be more or less depending on the stresses to which the composition will be subjected. One method of bonding is shown in Figure 6 wherein adhesive 13 is used to keep the tabs 12 in their bend-back configuration and to adhere adjacent layers. A typical adhesive can be a silicone or the above-mentioned hot melt, or an acrylic.

## Claims

1. A thermal control material which is a layered construction comprising at least two layers (9); each layer (9) being made of porous expanded polytetrafluoroethylene (10) which has on one of its surfaces a thin conductive film (11), the layers (9) being arranged so that the conductive film surface of one layer (9) is adjacent to the untreated surface of the adjacent layer (9), **characterized in that** each panel (9) contains a number of perforations defining numerous tabs (12) that are bent substantially 180° from the plane of the layer (9) so that the conductive film (11) in the tab (12) of one layer (9) is in electrical contact with the conductive film (11) covering the adjacent layer (9).

2. A thermal control material as claimed in claim 1 wherein the conductive film (11) is a metallic film.

3. A thermal control material as claimed in claim 1 wherein the layers (9) are joined together by joining means (13) located in the area where the bent back tab (12) abuts the adjacent layer (9).

4. A thermal control material as claimed in claim 1 wherein the metallized film (11) is vacuum deposited aluminum.

## Patentansprüche

1. Wärmereguliermaterial in Form eines Schichtaufbaus mit mindestens zwei Schichten (9), von denen jede Schicht (9) aus porösem, expandierten Polytetrafluorethylen (10) besteht, das auf einer ihrer Flächen einen dünnen leitenden Film (11) aufweist, wobei die Schichten (9) derart angeordnet sind, daß die Oberfläche des leitenden Films einer Schicht (9) der unbehandelten Oberfläche der benachbarten Schicht (9) benachbart ist, **dadurch gekennzeichnet**, daß jede Lage (9) eine Anzahl von Perforierungen aufweist, die zahlreiche Laschen (12) bilden, die auf der Ebene der Schicht (9) um etwa 180° gebogen sind, so daß der leitende Film (11) in der Lasche (12) einer Schicht (9) in elektrischem Kontakt mit dem leitenden Film (11) steht, der die benachbarte Schicht (9) abdeckt.

2. Wärmereguliermaterial nach Anspruch 1, bei dem der leitende Film (11) ein metallischer Film ist.

3. Wärmereguliermaterial nach Anspruch 1, bei dem die Schichten (9) durch Verbindungsmittel (12) verbunden sind, die sich in dem Bereich befinden, in dem die zurückgebogene Lasche (12) an der benachbarten Schicht (9) anliegt.

4. Wärmereguliermaterial nach Anspruch 1, bei dem der metallisierte Film (11) im Vakuum aufgedampftes Aluminium ist.

## Revendications

1. Matériau de maîtrise thermique qui est une construction en couche comprenant au moins deux couches (9); chaque couche (9) étant réalisée en polytétrafluoroéthylène expansé poreux (10) qui a, sur une de ses surfaces, un film conducteur mince (11), les couches (9) étant disposées de sorte que la surface de film conducteur d'une couche (9) est adjacente à la surface non traitée de la couche adjacente (9), caractérisé en ce que chaque panneau (9) contient un certain nombre de perforations définissant de nombreuses pattes (12) qui sont repliées sensiblement à 180° par rapport au plan de la couche (9), de sorte que le film conducteur (11) dans la patte (12) d'une couche (9) est en contact électrique avec le film conducteur (11) recouvrant la couche adjacente (9).

2. Matériau de maîtrise thermique selon la revendication 1 où le film conducteur (11) est un film métallique.

3. Matériau de maîtrise thermique selon la revendication 1 où les couches (9) sont reliées par des moyens de jonction (13) disposés dans la zone où la patte repliée (12) aboute la couche adjacente (9).

4. Matériau de maîtrise thermique selon la revendication 1, où le film métallisé (11) est de l'aluminium déposé sous vide.
